# EUROPÄISCHE PATENTSCHRIFT

(11) **EP 2 815 837 B1**
(45) Veröffentlichungstag und Bekanntmachung des Hinweises auf die Patenterteilung: **05.09.2018**
(21) Anmeldenummer: 13172666.3
(22) Anmeldetag: 19.06.2013
(51) Int. Cl.: B23F 21/22, B23F 21/14, B23C 5/22

(54) **Messerkopf und Verwendung desselben**
Cutting head and use of the same
Tête porte-lame et utilisation de celle-ci

(43) Veröffentlichungstag der Anmeldung: 24.12.2014
(73) Patentinhaber: Klingelnberg AG, 8050 Zürich (CH)
(72) Erfinder: Gsell, Jürgen, 42899 Remscheid (DE); Heckes, Leif, 45527 Hattingen (DE); Brieden, Christian, 42499 Hückeswagen (DE); Zagromski, Martin, 58300 Wetter / Ruhr (DE)
(74) Vertreter: Heusch, Christian

(56) Entgegenhaltungen:
- DE-A1-102010 008 187
- US-A- 3 566 506
- US-A1- 2004 191 022

## Beschreibung

Die vorliegende Erfindung betrifft Messerköpfe, insbesondere Stabmesserköpfe, zum Verzahnen von Werkstücken. Insbesondere geht es um Messerköpfe bzw. Stabmesserköpfe zum Verzahnen von Kegelrädern. Die Erfindung betrifft auch die Verwendung eines solchen Messerkopfs bzw. Stabmesserkopfs.

### Stand der Technik

Es gibt verschiedene Arten von Messerköpfen, die zur spanenden Bearbeitung von metallischen Werkstücken eingesetzt werden. Diese Messerköpfe weisen typischerweise einen Grundkörper auf, der mit Aufnahmeöffnungen versehen ist. Die eigentlichen Werkzeuge, die beim spanenden Bearbeiten des Werkstücks zum Einsatz kommen, werden in diese Aufnahmeöffnungen eingesetzt und mit Klemmmitteln im Grundkörper festgeklemmt. DE 10 2010 008 187 zeigt einen Messerkopf zur Aufnahme von mehreren Messern, wobei der Messerkopf für jedes der Messer eine separate Aufnahmeöffnung aufweist, und wobei der Messerkopf Klemmmittel zum Festklemmen der Messer in den Aufnahmeöffnungen umfasst.

Im Folgenden wird besonders auf Messerköpfe Bezug genommen, die zum Bearbeiten von Kegelrädern eingesetzt werden. Die Erfindung kann aber auch bei anderen Messerköpfen zum Einsatz kommen.

Bei den Messerköpfen, die zur Herstellung von Kegelrädern eingesetzt werden, unterscheidet man zwischen sogenannten Stabmesserköpfen und Formmesserköpfen. Ein Stabmesserkopf wird mit mehreren Stabmessern bestückt, wobei jedes Stabmesser einen Schaft und einen Kopfbereich aufweist. Stabmesserköpfe sind gegenüber Formmesserköpfen produktiver, da sich mehr Messer (Schneiden) auf dem gleichen Umfang unterbringen lassen, denn die Stabmesser werden in Stablängsrichtung und nicht in Umfangsrichtung nachgeschliffen und benötigen somit eine geringere Dicke in Umfangsrichtung. Ein Formmesserkopf ist hingegen mit Formmessern ausgestattet. Die Formmesser haben eine andere Form als die Stabmesser und sie werden nur an der Spanfläche nachgeschliffen. Das bekannte Zyklo-Palloid-Verfahren nutzt zum Beispiel derartige Formmesser zum Herstellen von Spiralkegelrädern.

Die Erfindung lässt sich nicht nur auf Stabmesserköpfe sondern auch auf Formmesserköpfe anwenden. Daher wird im Folgenden der allgemeine Begriff Messerkopf als Oberbegriff verwendet.

Bei diesen Messerköpfen ist wichtig, dass die Messer, die in dem Messerkopf befestigt werden, in eine genau definierte Position gebracht werden können. In dieser genau definierten Position sollten die Messer während des spanenden Bearbeitens eines Werkstücks bleiben. Es gibt daher verschiedene Lösungen, um die Messer in den Aufnahmeöffnungen des Messerkopfes durch Festklemmen zu befestigen.

Bei Messerköpfen werden teilweise sogenannte Unterlegplatten oder Parallelplatten eingesetzt, um die radiale Position eines Stab- oder Formmessers korrigieren zu können. Zu diesem Zweck werden diese Platten in unterschiedlichen Dicken angeboten. Damit kann man typischerweise die Position eines Messer nach radial aussen verlagern. Durch die Verwendung solcher Platten wird die Genauigkeit der Position der Messer, die Stabilität der Messerbefestigung und die Steifigkeit der gesamten Anordnung aus Messerkopf und Messer beeinträchtigt.

Es hat sich gezeigt, dass Messer je nach Messerkopf ein gewisses Spiel in den Aufnahmeöffnungen haben können und sich daher bei grosser Belastung in einem sehr kleinen Rahmen bewegen können. Untersuchungen haben ergeben, dass bei manchen Messerköpfen die einzelnen Messer zum Schwingen neigen, was zum Beispiel beim Schlichten von Zahnflanken eines Werkstücks einen negativen Einfluss auf die Oberflächengüte haben kann. Nicht alle Messerkopftypen zeigen diese Neigung zum Schwingen der einzelnen Messer. Offensichtlich hängt die Schwingneigung nicht nur von geometrischen sondern auch von materialtechnischen Eigenschaften der Messerköpfe ab.

Von daher liegt der Erfindung die Aufgabe zugrunde, eine Lösung bereit zu stellen, die es ermöglicht das Beibehalten genau vorgegebener Messerpositionen der Messer eines Messerkopfs zu erzielen.

Vor allem geht es darum auch bei dynamischen Belastungen während der Bearbeitung eines Werkstücks die Positionsgenauigkeit der Messer eines Messerkopfs sicherstellen zu können.

Die Aufgabe wird erfindungsgemäß durch einen Messerkopf gemäß Patentanspruch 1 gelöst. Vorteilhafte Ausgestaltungen der Erfindung bilden die Gegenstände der abhängigen Patentansprüche. Die Aufgabe wird auch durch einen Verwendungsanspruch nach Anspruch 14 gelöst.

Vorzugsweise kommt bei allen Ausführungsformen ein (Hydraulik-)ÖI als Fluid zum Einsatz.

Durch das Aufbringen eines Drucks wird erreicht, dass sich die dünne (Trenn-)Wand oder (Trenn-)Schicht leicht wölbt und gegen einen Teil des Messers drückt, das sich in der benachbarten Aufnahmeöffnung befindet.

Bei allen Ausführungsformen kann pro Aufnahmeöffnung je eine separate (d.h. eine von den anderen Kavitäten räumlich getrennte) Kavität vorgesehen sein. Jede dieser separaten Kavitäten ist individuell mit Druck beaufschlagbar.

Bei allen Ausführungsformen kann pro Aufnahmeöffnung je eine Kavität vorgesehen sein, die aber allesamt oder gruppenweise gemeinsam mit Druck beaufschlagbar sind.

Die Ausführungsformen können so ausgelegt sein, dass man bei Bedarf den Druck "zuschalten" kann. Diese Ausführungsformen arbeiten quasi digital. Entweder liegt ein Druck an, oder die Kavität(en) stehen nicht unter Druck.

Die Ausführungsformen können so ausgelegt sein, dass man bei Bedarf den Druck stufenweise oder stufenlos "zuschalten" kann. So kann man zum Beispiel bei besonders kritischen Bearbeitungsschritten mit höherem Druck arbeiten als bei weniger kritischen Schritten. Optional können diese Ausführungsformen Mittel aufweisen, die es ermöglichen das Schwingen der Messer zu ermitteln. Durch eine Steuerung oder Regelung kann dann der Druck in den Kavität(en) angepasst werden, bis die Schwingungen nicht mehr gemessen werden. So kann man das Resonanzverhalten optimieren.

Es ist ein Vorteil dieser Lösung, dass man die Kavität mit Druck beaufschlagen kann, falls dies erforderlich ist. So ist z.B. denkbar, dass bei gewissen Bearbeitungsschritten (z.B. beim Schruppen) ohne Druck in der Kavität gearbeitet wird, während beim anschliessenden Schlichten Druck in der Kavität vorgegeben wird, um optimale Oberflächen der bearbeiteten Flanken eines Zahnrads zu erzielen.

Es ist ein Vorteil dieser Lösung, dass man je nach Bedarf den Druck unterschiedlich stark vorgeben kann. Damit kann man zum Beispiel die Einstellungen ändern, um störende Resonanzen des Messerkopfs in den Griff zu bekommen.

Ausserdem bietet die Lösung gemäss Erfindung auch eine Möglichkeit, um kleinere Toleranzen auszugleichen, die sich produktionsbedingt oder aufgrund von Abnutzungen oder Beschädigungen ergeben können.

Die Erfindung lässt sich besonders vorteilhaft beim Fertigen grossmoduliger Zahnräder einsetzen, da sich hier bei konventionellen Messerköpfen die Neigung zum Schwingen einzelner Messer besonders deutlich zeigt. Durch den Einsatz der Erfindung kann hier effektive Abhilfe geschaffen werden.

Eine erfindungsgemäße Verwendung eines solchen Messerkopfs sieht vor, dass dieser Messerkopf zum Fertigen von Kegelrädern, insbesondere von spiralverzahnten Kegelrädern, eingesetzt wird.

Bevorzugte erfindungsgemäße Messerköpfe zeichnen sich weiterhin dadurch aus, dass sie im Wesentlichen monolithisch ausgeführt sind.

Die Bezugszeichenliste ist Bestandteil der Offenbarung.

### ZEICHNUNGEN

Die Figuren werden zusammenhängend und übergreifend beschrieben. Ausführungsbeispiele der Erfindung werden im Folgenden unter Bezugnahme auf die Zeichnungen näher beschrieben. Es zeigen:
- **FIG. 1**: zeigt eine stark schematisierte Seitenansicht eines beispielhaften Stabmesserkopfes im Schnitt, wobei der Messerkopf zum stirnseitigen Bestücken mit Stabmessern ausgelegt ist;
- **FIG. 2**: zeigt eine Seitenansicht eines weiteren beispielhaften Stabmesserkopfes, wobei der Messerkopf zum stirnseitigen Bestücken mit Stabmessern ausgelegt ist und wobei die Stabmesser leicht schräg stehen;
- **FIG. 3**: zeigt eine Perspektivansicht eines weiteren beispielhaften Stabmesserkopfes, der stirnseitig mit einem Stabmessersatz mit mehreren Paaren von Innenmessern und Aussenmessern bestückt ist;
- **FIG. 4**: zeigt eine stark schematisierte Seitenansicht eines weiteren beispielhaften Stabmesserkopfes, wobei der Messerkopf zum stirnseitigen Bestücken mit Stabmessern ausgelegt ist und wobei die Stabmesser senkrecht zur Stirnfläche stehen;
- **FIG. 5**: zeigt eine Perspektivansicht eines weiteren beispielhaften Stabmesserkopfes von schräg hinten, wobei die sichtbare Rückseite des Stabmesserkopfes offen gestaltet ist und wobei die Stabmesser leicht schräg stehen;
- **FIG. 6**: zeigt eine stark schematisierte Seitenansicht eines weiteren beispielhaften Messerkopfes im Teilschnitt, wobei der Messerkopf zum Bestücken mit Messern entlang des Umfangs ausgelegt ist;
- **FIG. 7A**: zeigt eine Perspektivansicht eines weiteren beispielhaften Stabmesserkopfes, der stirnseitig mit einem Stabmessersatz mit mehreren Stabmessern bestückt ist;
- **FIG. 7B**: zeigt eine Explosionsansicht eines Teils des Stabmesserkopfes der Fig. 7A
- **FIG. 7C**: zeigt eine Schnittansicht durch einen Teil des Stabmesserkopfes der Fig. 7A.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Die Erfindung lässt sich ohne weiteres auf andere Begriffssysteme und/oder Fachgebiete übertragen. In anderen Fachgebieten sind die Begriffe sinngemäß anzuwenden.

Die Erfindung lässt sich nicht nur auf Messerköpfe 20 anwenden, die mit Stabmessern 10 bestückbar sind, sondern die Erfindung kann auch auf Messerköpfe 20 angewendet werden, die mit Formmessern bestückbar sind. Die Erfindung ist auch auf Messerköpfe anwendbar, die mit sogenannten Wendeschneidplattenhaltern bestückt sind. In diesem Fall wird die Erfindung auf die am Messerkopf eingespannten Wendeschneidplattenhalter angewendet. Die folgenden Ausführungsbeispiele beziehen sich jedoch auf Stabmesserköpfe 20 die mit Stabmessern 10 bestückbar sind, ohne dadurch den Anspruch auf verallgemeinernde Auslegung aufzugeben.

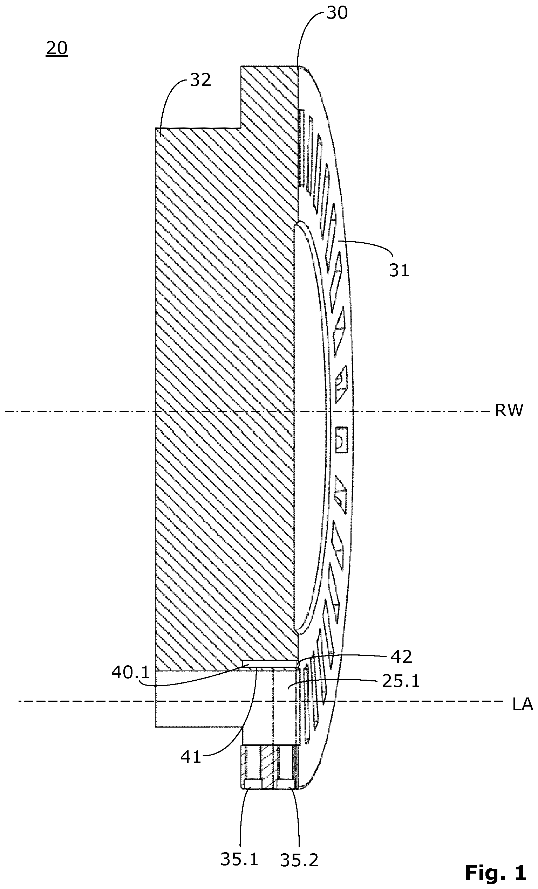

Die Erfindung wird im Folgenden anhand eines ersten Ausführungsbeispiels erläutert. Die entsprechende Fig. 1 zeigt eine stark schematisierte Seitenansicht eines beispielhaften Stabmesserkopfes 20 im Schnitt, wobei der Messerkopf 20 zum stirnseitigen Bestücken mit Stabmessern 10 ausgelegt ist. Die Stabmesser 10 sind hier nicht gezeigt.

Der Stabmesserkopf 20 ist speziell zur Aufnahme von mehreren Stabmessern 10 ausgelegt und er weist für jedes der Stabmesser 10 eine separate Aufnahmeöffnung auf. Die Aufnahmeöffnungen sind im Folgenden und auch bei den anderen Ausführungsbeispielen mit den Bezugszeichen 25.1 bis 25.n bezeichnet, wobei n eine ganze Zahl grösser 1 ist. n legt die Gesamtzahl der Aufnahmeöffnungen fest.

Es müssen nicht alle Aufnahmeöffnungen 25.1 - 25.n mit Stabmessern 10 bestückt sein. Dies gilt für alle Ausführungsformen.

Die Aufnahmeöffnungen 25.1 - 25.n stellen eine Ausnehmung im Grundkörper 30 des Messerkopfs 20 dar.

Gemäss Erfindung ist im Bereich mindestens einer der Aufnahmeöffnungen 25.1 eine Kavität 40.1 in dem Messerkopf 20 ausgebildet. In Fig. 1 sitzt die Kavität 40.1 unmittelbar neben der Aufnahmeöffnungen 25.1. Die Kavität 40.1 ist durch eine dünne Wand oder Schicht 41 von der Aufnahmeöffnung 25.1 getrennt, und die Kavität 40.1 ist mit einem Fluid befüllbar und mit einem Druck beaufschlagbar. Im Beispiel der Fig. 1 erstreckt sich die Kavität 40.1 parallel zu einer Längsachse LA der Aufnahmeöffnungen 25.1 und die Kavität 40.1 ist so angeordnet, dass sie eine Zugangs- oder Befüllöffnung 42 aufweist, die in der Stirnfläche 31 des Messerkopfs 20 mündet. Die Öffnung 42 und die Kavität 40.1 sind in Fig. 1 in stark schematisierter Form gezeigt.

Vorzugsweise werden die Kavitäten 40.1 - 40.m bei allen Ausführungsformen durch Bohren und/oder Fräsen im Grundkörper 30 angelegt. Der Grundkörper 30 kann aber auch gegossen werden, wobei vorzugsweise die Aufnahmeöffnungen 25.1 - 25.n und/oder Kavitäten 40.1 - 40.m bereits beim Giessen definiert werden.

Für die Ausformung der Aufnahmeöffnungen 25.1 - 25.n werden vorzugsweise zuerst Bohrungen in dem Grundkörper 30 eingebracht, damit beim Ausführen eines Drahterodierverfahrens ein Draht durch den Grundkörper 30 durchführt werden kann. Von den Bohrungen aus schneidet eine Maschine die gewünschte Form präzise aus, indem sie den Draht entlang einer vorgegebenen Strecke führt.

Der Stabmesserkopf 20 weist Klemmmittel zum Festklemmen der Stabmesser 10 in den Aufnahmeöffnungen 25.1 - 25.n auf. Hier können bei allen Ausführungsformen die bekannten Lösungen zum Einsatz kommen. In Fig. 1 sind zum Beispiel zwei Schraubenlöcher 35.1, 35.2 gezeigt, die sich im Wesentlichen parallel zur Stirnfläche 31 des Grundkörpers 30 in das Material des Grundkörpers 30 hinein erstrecken.

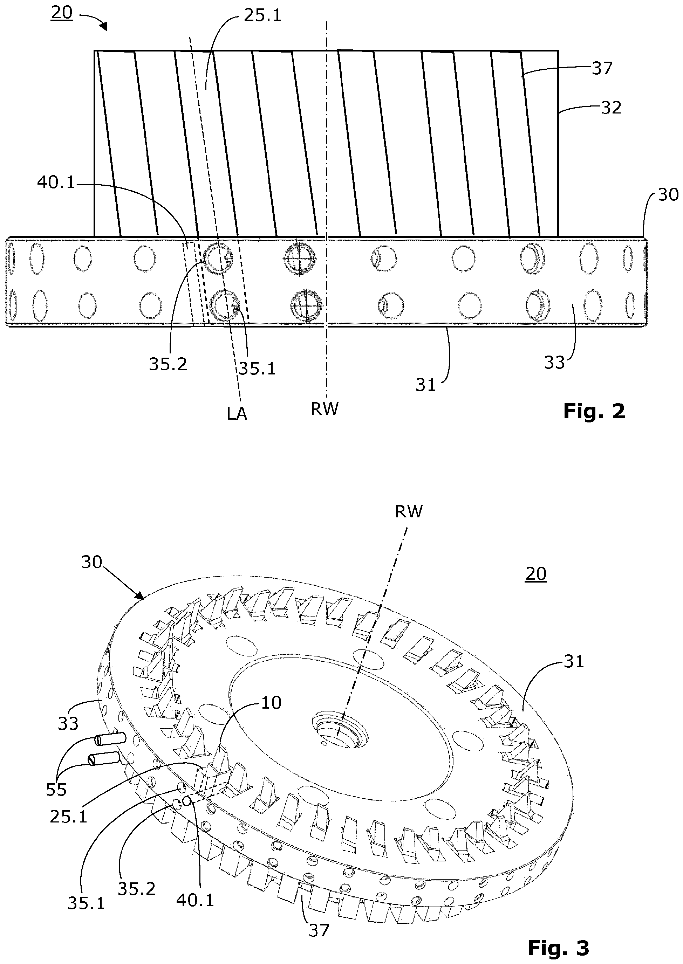

Bei allen Ausführungsformen können (Klemm-)Schrauben 55 zum Einsatz kommen, wie beispielhaft in Fig. 3 gezeigt. Wichtig ist, dass die hydraulische Klemmung der Erfindung bei allen Ausführungsformen unabhängig ist von der konstruktiven Ausführung der Klemmung der Messer 10 im Grundkörper 30. Die (Klemm-)Schrauben 55 können bei allen Ausführungsformen mit Unterlegscheiben und/oder Federn versehen sein, um das Festklemmen der Messer 10 zu verbessern. Die (Klemm-) Schrauben 55 können bei allen Ausführungsformen einteilig, zweiteilig oder mehrteilig ausgelegt sein, um das Festklemmen der Messer 10 zu verbessern. Die Messer 10 können bei allen Ausführungsformen mit Unterlegplatten und/oder Parallelplatten und/oder Keilen in die Aufnahmeöffnungen 25.1 - 25.n eingesetzt werden, um die (radiale) Position eines Messers 10 relativ zum Grundkörper 30 definieren oder korrigieren zu können.

Falls z.B. pro Messer 10 zwei (Klemm-) Schrauben 55 eingesetzt werden (wie in Fig. 3 angedeutet), so kann jede dieser beiden (Klemm-) Schrauben 55 einzeln gegen eine Spannseite des Messers 10 pressen, um die Klemmung des Messer 10 zu erreichen.

Alternativ können die (Klemm-)Schrauben 55 mit einem gemeinsamen Spannblock (nicht gezeigt) gegen eine Spannseite des Messers 10 pressen. Im Unterschied zur Ausführung mit den zwei einzelnen (Klemm-) Schrauben 55, wird in diesem Fall die Kraft der (Klemm-)Schrauben 55 über den gemeinsamen Spannblock auf die Spannseite des Messers 10 übertragen.

Durch das Einschrauben von Schrauben 55 in die Schraubenlöcher 35.1, 35.2 kann das Messer 10 in der entsprechenden Aufnahmeöffnung 25.1 fixiert werden.

Der Stabmesserkopf 20 der Erfindung zeichnet sich bei allen Ausführungsformen dadurch aus, dass im Bereich mindestens einer der Aufnahmeöffnungen 25.1 eine Kavität 40.1 in dem Material des Stabmesserkopfs 20 ausgebildet ist, wie bereits im Zusammenhang mit Fig. 1 erwähnt. Die Kavitäten sind im Folgenden und auch bei den anderen Ausführungsbeispielen mit den Bezugszeichen 40.1 bis 40.m bezeichnet, wobei m eine ganze Zahl grösser 1 ist. m legt die Gesamtzahl der Kavitäten fest.

Es gilt bei allen Ausführungsformen der folgende Zusammenhang: m * n. Vorzugsweise ist die Zahl m bei allen Ausführungsformen gleich der Zahl n, d.h. es gibt in diesem bevorzugten Fall genauso viele Kavitäten 40.1 bis 40.n wie Aufnahmeöffnungen 25.1 bis 25.n.

Die Kavitäten 40.1 bis 40.m sind durch eine dünne Trennwand oder Trennschicht 41 von der jeweils benachbarten Aufnahmeöffnung 25.1 - 25.n getrennt. Ausserdem sind die Kavitäten 40.1 - 40.m so ausgelegt, dass sie mit einem Füllstoff, vorzugsweise in Form eines Fluids, befüllbar und mit einem Druck beaufschlagbar sind.

In Fig. 1 ist ein Stabmesserkopf 20 gezeigt, dessen Grundkörper 30 einen vorderen scheibenförmigen und einen hinteren scheibenförmigen Bereich umfasst. Der Grundkörper 30 ist bei allen Ausführungsformen im Wesentlichen rotationssymmetrisch zu einer Werkzeugachse RW ausgelegt. Der Grundkörper 30 weist am vorderen scheibenförmigen Bereich eine sogenannte Stirnfläche 31 auf, die senkrecht steht zu der Werkzeugachse RW.

Die Aufnahmeöffnungen 25.1 - 25.n der in Fig. 1 gezeigten Ausführungsform sind in dieser Stirnfläche 31 ausgebildet und sie erstrecken sich in das Material des Grundkörpers 30 hinein, wie in Fig. 1 im geschnittenen Bereich anhand einer einzelnen Aufnahmeöffnung 25.1 zu erkennen ist. Die Kavität 40.1 verläuft hier beispielsweise parallel zu der Längsachse LA der Aufnahmeöffnung 25.1. Die Werkzeugachse RW und die Längsachse LA liegen hier in diesem stark vereinfacht dargestellten Sonderfall parallel.

In einer parallelen Konstellation der Kavitäten 40.1 - 40.m und der Aufnahmeöffnungen 25.1 - 25.n, können sich die Kavitäten 40.1 - 40.m über die gesamte Länge der Aufnahmeöffnungen 25.1 - 25.n erstrecken, oder die Kavitäten 40.1 - 40.m können kürzer sein, wie in Fig. 1 angedeutet. Die Länge wird hier parallel zur Längsachse LA ermittelt.

Bei Messerköpfen 20, bei denen der Grundkörper im rückwärtigen Bereich offen ist (wie z.B. in Fig. 1), liegen die Schäfte der Messer 10 in diesem Bereich mindestens teilweise im Freien. Vorzugsweise verläuft daher die Kavität 40.1 nur entlang des Bereichs der Aufnahmeöffnung 25.1, die komplett vom Material des Grundkörpers des Messerkopfs 20 umgeben ist.

Die Kavitäten 40.1 - 40.m sind jeweils durch eine dünne Trennwand oder Trennschicht 41 von der jeweils benachbarten Aufnahmeöffnung 25.1 - 25.n getrennt. In Fig. 1 sieht man in der Schnittdarstellung die Trennschicht 41, die hier aufgrund der parallelen Konstellation eine homogene Dicke (senkrecht zur Längsachsen LA) hat.

Fig. 2 zeigt eine Seitenansicht eines weiteren beispielhaften Stabmesserkopfes 20, wobei der Messerkopf 20 zum stirnseitigen Bestücken mit Stabmessern 10 (nicht gezeigt) ausgelegt ist und wobei die Stabmesser 10 in Bezug zur Werkzeugachse RW leicht schräg stehen (d.h. LA ist gegenüber RW geneigt). In Fig. 2 ist der Verlauf einer Aufnahmeöffnung 25.1 strichliert dargestellt, da sich diese Aufnahmeöffnung 25.1 im Inneren des vorderen scheibenförmigen Bereichs des Grundkörpers 30 erstreckt. Im rückwärtigen scheibenförmigen Abschnitt 32 sind die Aufnahmeöffnung 25.1 sichtbar und die Schäfte der Messer 10 (falls der Messerkopf 20 mit Messern 10 bestückt ist) liegen zum Teil im Freien. An der Umfangsseite (an der Mantelfläche) des vorderen scheibenförmigen Bereichs des Grundkörpers 30 sind pro Aufnahmeöffnung 25.1 - 25.n je zwei Schraubenlöcher vorgesehen. Die beiden Schraubenlöcher der Aufnahmeöffnung 25.1 sind mit den Bezugszeichen 35.1, 35.2 bezeichnet. Die Schraubenlöcher stehen jeweils paarweise schräg, da hier auch die Aufnahmeöffnungen 25.1 - 25.n schräg stehen.

Auch bei dem in Fig. 2 gezeigten Ausführungsbeispiel erstreckt sich die Kavität 40.1 parallel zu der Längsachse LA der Aufnahmeöffnung 25.1. Die Kavität 40.1 erstreckt sich in diesem Fall die gesamte Länge der Aufnahmeöffnung 25.1 im vorderen scheibenförmigen Bereich des Grundkörpers 30. Die Kavität 40.1 erstreckt sich hier nicht in den rückwärtigen scheibenförmigen Abschnitt 32.

Fig. 3 zeigt eine Perspektivansicht eines weiteren beispielhaften Stabmesserkopfs 20, der mit einem Stabmessersatz mit mehreren Paaren von Innenmessern und Aussenmessern bestückt ist. Der Stabmesserkopf 20 hat auch hier einen scheibenförmigen Grundkörper 30, an dessen Stirnfläche 31 Aufnahmeöffnung 25.1 - 25.n (auch Messerschächte genannt) zum Einsetzen und Befestigen der Stabmesser 10 vorgesehen sind. Im gezeigten Beispiel weist der Grundkörper 30 insgesamt vierzig Aufnahmeöffnung 25.1 - 25.40 (mit n = 40) auf. Die vierzig Aufnahmeöffnungen 25.1 - 25.40 (sind mit zwanzig Innenmessern und zwanzig Aussenmessern bestückt.

Die Stabmesser 10 des Ausführungsbeispiels der Fig. 3 stehen senkrecht zur Stirnfläche 31. Pro Aufnahmeöffnung 25.1 - 25.40 ist auch hier je ein Paar von Schraubenlöchern vorgesehen. In Fig. 3 sind nur die beiden Schraubenlöcher 35.1, 35.2 der Aufnahmeöffnung 25.1 mit Bezugszeichen gekennzeichnet.

Es sind zwei (Klemm-)Schrauben 55 links neben dem Messerkopf 20 gezeigt. Diese Schrauben 55 können zum Beispiel in die Schraubenlöcher 35.1, 35.2 eingesetzt und angezogen werden, um das Stabmesser 10 in der Aufnahmeöffnung 25.1 zu fixieren.

Die Rückseite (des hintere scheibenförmigen vorderen Bereichs) des Grundkörpers 30 ist auch hier offen ausgelegt und die rückwärtigen Enden der Stabmesser 10 liegen offen. Alle Ausführungsformen der Erfindung können auf der Rückseite offen oder geschlossen gestaltet sein.

In Fig. 3 verläuft die beispielhaft gezeigte Kavität 40.1 quer zu der Aufnahmeöffnung 25.1, wie schematisch durch strichlierte Linien angedeutet. Die Kavität 40.1 mündet hier in der Umfangsfläche 33 des Grundkörpers 30. Mindestens ein Stück weit verläuft diese Kavität 40.1 im Inneren des Grundkörpers 30 tangential zu einer Wandung der Aufnahmeöffnung 25.1. Zwischen einem Abschnitt der Kavität 40.1 und einem Abschnitt der Aufnahmeöffnung 25.1 liegt einen Trennwand oder Trennschicht 41, die in Fig. 3 jedoch nicht erkennbar ist.

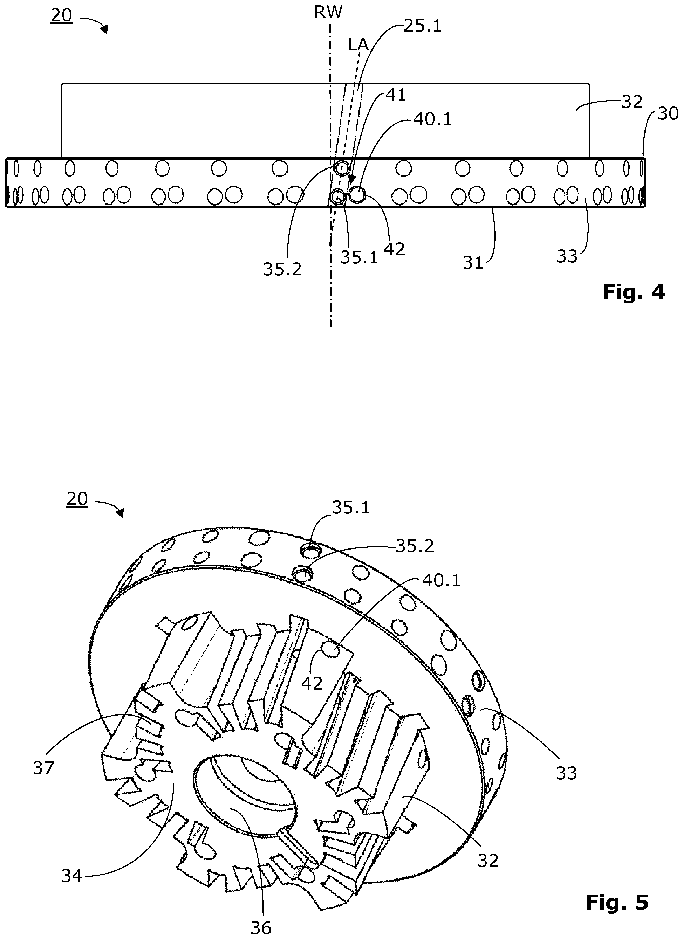

Fig. 4 zeigt eine stark schematisierte Seitenansicht eines weiteren beispielhaften Stabmesserkopfes 20, wobei der Messerkopf 20 wiederum zum stirnseitigen Bestücken mit Stabmessern 10 (nicht gezeigt) ausgelegt ist und wobei die Stabmesser 10 schräg zur Stirnfläche 31 des Grundkörpers 30 stehen. Was die Details dieser Ausführungsform anbelangt wird auf das vorher Geschriebene verwiesen. Wie bei der Ausführungsform nach Fig. 3 liegen die Zugangs- oder Befüllöffnungen 42 der Kavitäten 40.1 - 40.m auf der Mantelfläche 33. Pro Aufnahmeöffnung 25.1 - 25.n sind hier eine Kavität 40.1 - 40.n und pro Kavität 40.1 - 40.n eine Zugangs- oder Befüllöffnung 42 vorgesehen.

Auch bei dieser Ausführungsform verläuft die Kavität 40.1 quer zu der Aufnahmeöffnung 25.1, wobei von der Kavität 40.1 nur die Mündungsöffnung in der Umfangsfläche 33 des Grundkörpers 30 erkennbar ist. Mindestens ein Stück weit verläuft diese Kavität 40.1 im Inneren des Grundkörpers 30 tangential zu einer Wandung der Aufnahmeöffnung 25.1. Zwischen einem Abschnitt der Kavität 40.1 und einem Abschnitt der Aufnahmeöffnung 25.1 liegt einen Trennwand oder Trennschicht 41, deren Lage in Fig. 4 jedoch nur andeutungsweise erkennbar ist.

Fig. 5 zeigt eine Perspektivansicht eines weiteren beispielhaften Stabmesserkopfes 20 von hinten, wobei die sichtbare Rückseite des Stabmesserkopfes 20 offen gestaltet ist und wobei die Stabmesser 10 (nicht gezeigt) leicht schräg stehen. Was die Details dieser Ausführungsform anbelangt wird auf das vorher Geschriebene verwiesen.

Bei der Ausführungsform nach Fig. 5 liegt der Zugang zu der/den Kavitäten 40.1 - 40.m im hinteren Bereich 32 des Grundkörpers 30. In Inneren des Grundkörpers 30 (vorzugsweise im vorderen scheibenförmigen Bereich) verläuft/verlaufen diese Kavitäten 40.1 - 40.m mindestens ein Stück weit tangential zu der/den Wandungen einer oder mehrerer Aufnahmeöffnungen 25.1 - 25.n. Zwischen einem Abschnitt der Kavität 40.1 und einem Abschnitt der Aufnahmeöffnung 25.1 liegt einen Trennwand oder Trennschicht, die in Fig. 5 jedoch nicht erkennbar ist.

Der hintere Bereich 32 des Grundkörpers 30 weist hier offene Messerschächte 37 als Fortsetzungen der Aufnahmeöffnungen 25.1 - 25.n auf. Auf der rückseitigen Stirnfläche 34 des Grundkörpers 30 kann man die Durchdringungsöffnungen der Messerschächte 37 und auch eine Zentralbohrung 36 erkennen.

Alle Ausführungsformen können eine solche Zentralbohrung 36 aufweisen, die es erlaubt den Messerkopf 20 in bekannter Art und Weise mit einer Werkstückspindel einer Maschine zu verbinden. Es können aber auch bei allen Ausführungsformen andere Befestigungsmittel vorgesehen sein.

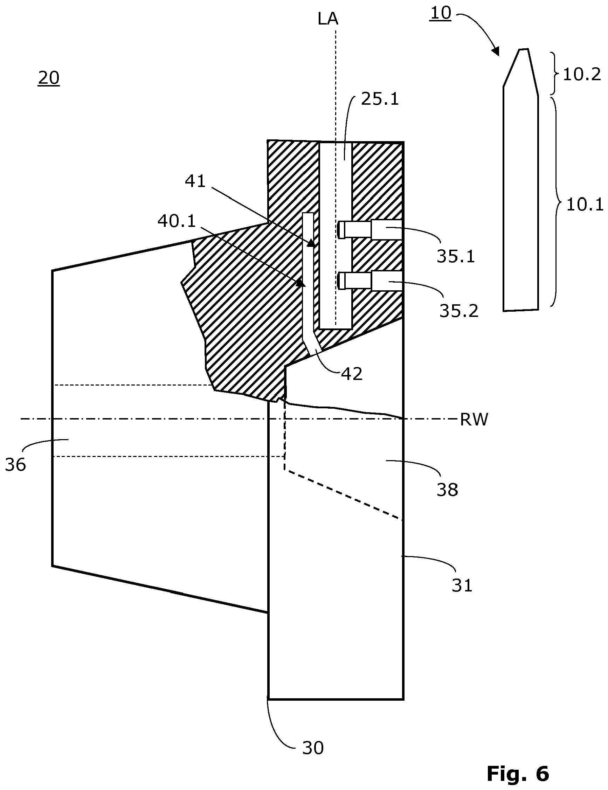

Fig. 6 zeigt eine stark schematisierte Seitenansicht eines weiteren beispielhaften Messerkopfes 20 im Teilschnitt, wobei der Messerkopf 20 zum Bestücken mit Messern 10 entlang des Umfangs ausgelegt ist. Ein beispielhaftes Messer 10 ist in stark schematisierter Form neben dem Messerkopf 20 gezeigt, um die Proportionen zu verdeutlichen. Das Messer 10 hat einen Schaft 10.1 und einen Kopfbereich 10.2.

Die Messer 10 liegen hier radial oder schräg nach aussen weisend im Grundkörper 30, wobei mindestens der aktive Bereich (Kopfbereich 10.2 genannt) der Messer 10 aus der Umfangsfläche 33 der Messerkopfs 20 heraus ragt. In Fig. 6 ist im geschnittenen Bereich eine Aufnahmeöffnung 25.1 gezeigt. Die Schraubenlöcher 35.1, 35.2 erstrecken sich im gezeigten Beispiel von der Stirnseite 31 aus in Richtung der im Inneren der Grundkörpers 30 liegenden Aufnahmeöffnungen 25.1 - 25.n. Es ist auf der Stirnseite eine konzentrisch zur Werkzeugachse RW verlaufende Senke 38 (diese Senke hat vorzugsweise die Form eines Kegelstumpfs, der konzentrisch zur Werkzeugachse RW liegt) vorhanden, wie angedeutet. Eine Zentralbohrung 36 kann den gesamten Grundkörper des Messerkopfs 20 durchdringen, wie in Fig. 6 angedeutet. Im Bereich dieser Senke 38 kann die Kavität 40.1, respektive ihre Mündung (Befüll-/Zugangsöffnung 42) angeordnet sein, wie in Fig. 6 beispielhaft dargestellt. Die eigentliche Kavität 40.1 erstreckt sich hier gegenläufig parallel zu der Längsachse LA der Aufnahmeöffnung 25.1. Zwischen einem Abschnitt der Kavität 40.1 und einem Abschnitt der Aufnahmeöffnung 25.1 liegt einen Trennwand oder Trennschicht 41, die in Fig. 6 erkennbar ist.

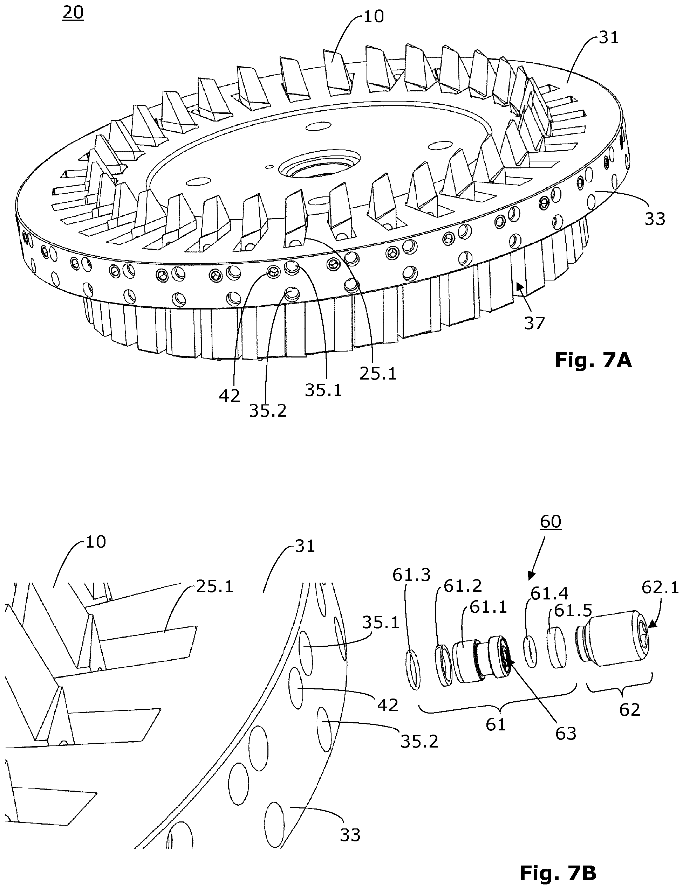

Fig. 7A zeigt eine Perspektivansicht eines weiteren beispielhaften Stabmesserkopfes 20, der stirnseitig mit einem Stabmessersatz mit mehreren Stabmessern 10 bestückt ist. Hier sind n=32 Aufnahmeöffnungen 25.1 bis 25.32 vorgesehen und jede dieser Aufnahmeöffnungen 25.1 bis 25.32 ist mit je einem Stabmesser 10 bestückt.

Der Grundkörper des Messerkopfs 20 hat wiederum einen vorderen scheibenförmigen Bereich und einen hinteren offenen Bereich. In dem hinteren offenen Bereich sind offene Messerschächte 37 sichtbar (ähnlich wie z.B. in Fig. 5). Pro Stabmesser 10 sind hier zwei Schraubenlöcher vorgesehen. In Fig. 7A sind jedoch nur zwei der Schraubenlöcher mit den Bezugszeichen 35.1, 35.2 versehen. Die Schraubenlöcher 35.1, 35.2 sind der Aufnahmeöffnung 25.1 zugeordnet, d.h. mit den Schrauben 55, die hier eingeschraubt werden können, wird das Stabmesser 10 befestigt, das in der Aufnahmeöffnung 25.1 sitzt. Die Schrauben 55 sind hier nicht gezeigt.

Pro Aufnahmeöffnung 25.1 bis 25.32 ist hier je eine Kavität 40.1 bis 40.32 im Grundkörper des Messerkopfs 20 vorgesehen. Diese Kavitäten 40.1 bis 40.32 sind in Fig. 7A nicht sichtbar. Man kann jedoch erkennen, dass für jede der Kavitäten 40.1 bis 40.32 eine Zugangs- oder Befüllöffnung 42 an der Umfangsfläche 33 des Grundkörpers 30 sitzt.

Fig. 7B zeigt eine Explosionsansicht eines Teils des Stabmesserkopfes 20 der Fig. 7A. Eine der Aufnahmeöffnungen ist mit dem Bezugszeichen 25.1 bezeichnet. Rechts neben dem Messerkopf 20 sind beispielhafte Verschlussmittel 60 der Erfindung gezeigt. In jeder der Zugangs- oder Befüllöffnungen 42 wird je ein solches Verschlussmittel 60 angeordnet. Die Verschlussmittel 60 werden hier auch als Hydrospannung bezeichnet.

Die Verschlussmittel 60 sind vorzugsweise bei allen Ausführungsformen mehrteilig aufgebaut/zusammengesetzt. Die Fig. 7B zeigt eine beispielhafte Ausführungsform, bei der die Verschlussmittel 60 sechs Teile umfasst. Von Innen nach Aussen betrachtet, umfassen die Verschlussmittel 60 vorzugsweise:
- eine Dichtgruppe oder Dichteinheit 61,
- einen Gewindestift 62, der als Druckkörper dient.

Insgesamt sind die Verschlussmittel 60 vorzugsweise bei allen Ausführungsformen so aufgebaut, dass sie es einerseits ermöglichen durch das Bewegen einer Dichtgruppe oder Dichteinheit 61 einen Druck im Inneren der zugeordneten Kavität 40.m aufzubauen. Andererseits kommt ein Druckkörper (vorzugsweise in Form eines Gewindestifts 62) zum Einsatz, um die Kavität 40.m samt Dichtgruppe oder Dichteinheit 61 nach aussen abzudichten.

Vorzugsweise umfasst die Dichtgruppe oder Dichteinheit 61 bei allen Ausführungsformen einen Stopfen 61.1, einen Stützring 61.2, einen O-Ring 61.3, einen O-Ring 61.4 und eine Dichtplatte 61.5. Der/die O-Ringe 61.3, 61.4 dienen als Radialdichtungen, um beim Bewegen der Dichtgruppe oder Dichteinheit 61 in der Kavität 40.m oder in der Befüll-/Zugangsöffnung 42 ein Austreten eines Fluids aus der Kavität 40.m zu verhindern.

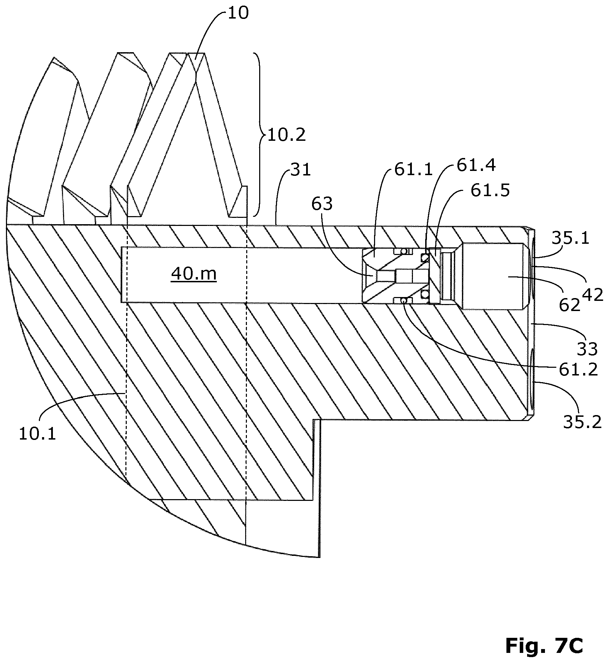

Fig. 7C zeigt eine Schnittansicht eines Teils des Stabmesserkopfes 20 der Fig. 7A. Eine der Kavitäten 40.m ist im Längsschnitt gezeigt. Die Trennwand oder Trennschicht 41, die zwischen einem Abschnitt der Kavität 40.m und der zugeordneten Aufnahmeöffnung 21.n sitzt, ist nicht in Fig. 7C zu erkennen. In der Schnittansicht ist zu erkennen, dass ein Verschlussmittel 60 im Bereich der Befüll-/Zugangsöffnung 42 sitzt und die Kavität 40.m gegen Aussen abdichtet. Das Verschlussmittel 60 umfasst die Elemente, die in Fig. 7B gezeigt sind. Um die genaue Position eines der Stabmesser 10 zu kennzeichnen, sind in Fig. 7C der Stabmesserkopf 10.2 und der Schaft 10.1 dargestellt.

Vorzugsweise umfasst die Dichtgruppe oder Dichteinheit 61 bei allen Ausführungsformen Elemente, die zur axialen Abdichtung dienen.

Vorzugsweise umfasst die Dichtgruppe oder Dichteinheit 61 bei allen Ausführungsformen spezielle Elemente, oder die Dichtgruppe oder Dichteinheit 61 ist bei allen Ausführungsformen so ausgelegt, dass durch eine Öffnung hindurch Fluid in die Kavität 40.m zugeführt oder aus der Kavität 40.m entnommen werden kann. In Fig. 7B ist andeutungsweise zu erkennen, dass der Stopfen 61.1 eine zentrale Durchgangsöffnung 63 aufweisen kann. Wenn man in der gezeigten Ausführungsform den Gewindestift 62 heraus schraubt und die Druckplatte 61.5 sowie den O-Ring 61.4 aus der Befüll-/Zugangsöffnung 42 entfernt, so kann man durch die zentrale Durchgangsöffnung 63 hindurch die Kavität 40.m mit Fluid befüllen.

Das Befüllen oder Entnehmen von Fluid kann aber bei allen Ausführungsformen der Erfindung auch unabhängig von der Zugangsöffnung 42 erfolgen, indem z.B. ein separater Kanal, der mit Druck beauschlagbar ist, zu der Kavität 40.m führt.

Vorzugsweise drückt bei allen Ausführungsformen der Gewindestift 62 in axialer Richtung über die Dichtplatte 61.5 auf die Dichtgruppe oder Dichteinheit 61.

Vorzugsweise ist bei allen Ausführungsformen der Gewindestift 62 mit einem Aussengewinde versehen (nicht in Fig. 7B gezeigt) und die Befüll-/Zugangsöffnung 42 weist ein korrespondierendes Innengewinde auf.

Vorzugsweise kommt bei allen Ausführungsformen ein Stellglied zum Einsatz (nicht gezeigt), das es ermöglicht den Druck automatisch zu kontrollieren und zu beeinflussen. Dies kann zum Beispiel mittels einer gemeinsamen Hydraulikleitung erfolgen, die an den Messerkopf 20 anschließbar ist.

Vorzugsweise weist der Gewindestift 62 bei allen Ausführungsformen einen Schraubenkopf 62.1 (z.B. mit einer Inbus-Öffnung) auf, wie in Fig. 7B gezeigt. Mit einem Werkzeug (z.B. mit einem Inbusschlüssel) kann man die Verschlussmittel 60 individuell tiefer einschrauben um den Druck in der Kavität 40.m zu erhöhen, oder man kann die Verschlussmittel 60 etwas heraus schrauben, um den Druck zu reduzieren.

**Bezugszeichenliste**

| | |
|---|---|
| Stabmesser | 10 |
| Schaft | 10.1 |
| Kopfbereich | 10.2 |
| | |
| Messerkopf | 20 |
| | |
| Aufnahmeöffnungen | 25.1 - 25.n |
| | |
| Grundkörper | 30 |
| Stirnfläche | 31 |
| hinterer Bereich | 32 |
| Umfangsfläche | 33 |
| Rückseitige Stirnfläche | 34 |
| Schraubenlöcher | 35.1, 35.2 |
| Zentralbohrung | 36 |
| Messerschächte | 37 |
| Senke | 38 |
| | |
| Kavität | 40.1 - 40.m |
| Trennschicht / Trennwand | 41 |
| Befüll-/Zugangsöffnung | 42 |
| Schrauben | 55 |
| | |
| Verschlussmittel | 60 |
| Dichtgruppe oder Dichteinheit | 61 |
| Stopfen | 61.1 |
| Stützring | 61.2 |
| O-Ringe | 61.3, 61.4 |
| scheibenförmige Dichtplatte | 61.5 |
| Druckkörper / Gewindestift | 62 |
| Schraubenkopf | 62.1 |
| Durchgangsöffnung | 63 |
| Längsachse | LA |
| ganze Zahl | m |
| ganze Zahl | n |
| Werkzeugachse | RW |

## Patentansprüche

1. Messerkopf (20) zur Aufnahme von mehreren Messern (10), wobei der Messerkopf (20) für jedes der Messer (10) eine separate Aufnahmeöffnung (25.1 - 25.n) aufweist, und wobei der Messerkopf (20) Klemmmittel (35.1, 35.2, 55) zum Festklemmen der Messer (10) in den Aufnahmeöffnungen (25.1 - 25.n) umfasst, **dadurch gekennzeichnet, dass** im Bereich mindestens einer der Aufnahmeöffnungen (25.1) eine Kavität (40.1) in dem Messerkopf (20) ausgebildet ist, die durch eine dünne Wand oder Schicht (41) von dieser Aufnahmeöffnung (25.1) getrennt ist, und dass die Kavität (40.1) mit einem Fluid befüllbar und mit einem Druck beaufschlagbar ist, wobei die hydraulische Klemmung unabhängig von der konstruktiven Ausführung der Klemmmittel (35.1, 35.2, 55) zum Festklemmen der Messer ist, und wobei die hydraulische Klemmung durch das Aufbringen eines Drucks erreicht wird, indem sich die dünne Wand oder Schicht (41) wölbt und gegen einen Teil des Messers (10) drückt, das sich in der benachbarten Aufnahmeöffnung (25.1) befindet.

2. Messerkopf (20) nach Anspruch 1, **dadurch gekennzeichnet, dass** sich die Kavität (40.1) parallel zu einer Längsachse (LA) der Aufnahmeöffnung (25.1), quer zu dieser Längsachse (LA) oder schräg zu dieser Längsachse (LA) im Material des Messerkopfs (20) erstreckt.

3. Messerkopf (20) nach Anspruch 1 oder 2, **dadurch gekennzeichnet, dass** der Messerkopf (20) einen Grundkörper (30) mit einer Stirnfläche (31) aufweist und dass die Aufnahmeöffnungen (25.1 - 25.n) in dieser Stirnfläche (31) ausgebildet sind und sich in den Grundkörper (30) hinein erstrecken.

4. Messerkopf (20) nach Anspruch 3, **dadurch gekennzeichnet, dass** die Kavität (40.1) von der Stirnfläche (31) zugänglich ist und dass die Kavität (40.1) sich senkrecht zu der Stirnfläche (31) oder schräg zu der Stirnfläche (31) in den Grundkörper (30) hinein erstreckt.

5. Messerkopf (20) nach Anspruch 3, **dadurch gekennzeichnet, dass** die Kavität (40.1) von einer Umfangsfläche (33) her zugänglich ist und sich parallel zu der Stirnfläche (31) oder schräg in den Grundkörper (30) hinein erstreckt.

6. Messerkopf (20) nach einem der Ansprüche 1 bis 5, **dadurch gekennzeichnet, dass** die dünne Wand oder Schicht (41) sich zwischen einem Abschnitt der Aufnahmeöffnung (25.1) und einem Abschnitt der Kavität (40.1) befindet.

7. Messerkopf (20) nach einem der Ansprüche 1 bis 6, **dadurch gekennzeichnet, dass** die dünne Wand oder Schicht (41) durch einen Fluiddruck des Fluids in der Kavität (40.1) verformbar ist.

8. Messerkopf (20) nach einem der Ansprüche 1 bis 6, **dadurch gekennzeichnet, dass** pro Aufnahmeöffnung (25.1) eine Kavität (40.1) vorhanden ist.

9. Messerkopf (20) nach einem der Ansprüche 1 bis 6, **dadurch gekennzeichnet, dass** eine Kavität (40.1) mehreren Aufnahmeöffnungen (25.1) zugeordnet ist.

10. Messerkopf (20) nach einem der Ansprüche 1 bis 6, **dadurch gekennzeichnet, dass** eine gemeinsamen Kavität (40.1) vorgesehen ist, wobei diese gemeinsamen Kavität (40.1) von mehreren Aufnahmeöffnungen (25.1) je durch eine dünne Wand oder Schicht (41) getrennt ist.

11. Messerkopf (20) nach einem der Ansprüche 1 bis 10, **dadurch gekennzeichnet, dass** er mindestens ein Verschlussmittel (10) umfasst, das es ermöglicht eine oder mehrere der Kavitäten (40.1) zu verschließen.

12. Messerkopf (20) nach Anspruch 11, **dadurch gekennzeichnet, dass** das Verschlussmittel (10) mindestens eine Dichtgruppe oder Dichteinheit (61) und einen Gewindestift (62) umfasst.

13. Messerkopf (20) nach Anspruch 12, **dadurch gekennzeichnet, dass** die Verschlussmittel (10) so ausgelegt sind, dass ein Zuführen und/oder Entnehmen des Fluids durch einen Stopfen (61.1) der Dichtgruppe oder Dichteinheit (61) hindurch möglich ist.

14. Verwendung eines Messerkopfs (20) nach einem der Ansprüche 1 bis 13, **dadurch gekennzeichnet, dass** vor dem Verwenden des Messerkopfs (20) zum spanenden Bearbeiten eines Werkstücks der Druck des Fluids in mindestens einer Kavität (40.1) angepasst wird.

15. Verwendung nach Anspruch 14, **dadurch gekennzeichnet, dass** das Anpassen des Drucks manuell durch Einsatz eines Werkzeugs erfolgt.

16. Verwendung nach Anspruch 14, **dadurch gekennzeichnet, dass** das Anpassen des Drucks durch das externe Vorgeben eines Hydraulikdrucks erfolgt.

## Claims

1. A cutter head (20) for accommodating multiple cutters (10), wherein the cutter head (20) has a separate receptacle opening (25.1 - 25.n) for each of the cutters (10), and wherein the cutter head (20) comprises clamping means (35.1, 35.2, 55) for clamping the cutters (10) in the receptacle openings (25.1 - 25.n), **characterized in that** a cavity (40.1) is implemented in the cutter head (20) in the region of at least one of the receptacle openings (25.1), which is separated by a thin wall or layer (41) from this receptacle opening (25.1), and that the cavity (40.1) can be filled with a fluid and pressure can be applied thereto, wherein the hydraulic clamping is independent of the constructive implementation of the clamping means (35.1, 35.2, 55) for clamping the cutters and wherein the hydraulic clamping is obtained by the application of a pressure **in that** the thin wall or layer (41) bulges and presses against a part of the cutter (10) which is situated in the adjacent receptacle opening (25.1).

2. The cutter head (20) according to claim 1, **characterized in that** the cavity (40.1) extends parallel to a longitudinal axis (LA) of the receptacle opening (25.1), transversely to this longitudinal axis (LA), or diagonally to this longitudinal axis (LA) in the material of the cutter head (20).

3. The cutter head (20) according to claim 1 or 2, **characterized in that** the cutter head (20) has a main body (30) having an end face (31), and the receptacle openings (25.1 - 25.n) are implemented in this end face (31) and extend into the main body (30).

4. The cutter head (20) according to claim 3, **characterized in that** the cavity (40.1) is accessible from the end face (31), and the cavity (40.1) extends perpendicularly to the end face (31) or diagonally to the end face (31) into the main body (30).

5. The cutter head (20) according to claim 3, **characterized in that** the cavity (40.1) is accessible from a circumferential surface (33) and extends parallel to the end face (31) or diagonally into the main body (30).

6. The cutter head (20) according to one of claims 1 to 5, **characterized in that** the thin wall or layer (41) is located between a section of the receptacle opening (25.1) and a section of the cavity (40.1).

7. The cutter head (20) according to one of claims 1 to 6, **characterized in that** the thin wall or layer (41) is deformable by a fluid pressure of the fluid in the cavity (40.1).

8. The cutter head (20) according to one of claims 1 to 6, **characterized in that** one cavity (40.1) is provided per receptacle opening (25.1).

9. The cutter head (20) according to one of claims 1 to 6, **characterized in that** one cavity (40.1) is associated with multiple receptacle openings (25.1).

10. The cutter head (20) according to one of claims 1 to 6, **characterized in that** one shared cavity (40.1) is provided, wherein this shared cavity (40.1) is separated from multiple receptacle openings (25.1) by a thin wall or layer (41) in each case.

11. The cutter head (20) according to one of claims 1 to 10, **characterized in that** it comprises at least one closure means (10), which allows one or more of the cavities (40.1) to be closed.

12. The cutter head (20) according to claim 11, **characterized in that** the closure means (10) comprises at least one sealing group or sealing unit (61) and a threaded pin (62).

13. The cutter head (20) according to claim 12, **characterized in that** the closure means (10) are designed so that it is possible to supply and/or remove the fluid through a plug (61.1) of the sealing group or sealing unit (61).

14. A use of a cutter head (20) according to one of claims 1 to 13, **characterized in that**, before the use of the cutter head (20) for the cutting machining of a workpiece, the pressure of the fluid in at least one cavity (40.1) is adapted.

15. The use according to claim 14, **characterized in that** the adaptation of the pressure is performed manually by use of a tool.

16. The use according to claim 14, **characterized in that** the adaptation of the pressure is performed by the external pre-definition of a hydraulic pressure.

## Revendications

1. Tête porte-lames (20) destinée à recevoir plusieurs lames (10), la tête porte-lames (20) présentant pour chacune des lames (10) une ouverture de réception séparée (25.1 - 25.n), et la tête porte-lames (20) comprenant des moyens de serrage (35.1, 35.2, 55) pour bloquer les lames (10) dans les ouvertures de réception (25.1 - 25.n), **caractérisée en ce qu'**il est réalisé dans la zone d'au moins une des ouvertures de réception (25.1) une cavité (40.1) dans la tête porte-lames (20) qui est séparée de cette ouverture de réception (25.1) par une fine paroi ou une fine couche (41), et **en ce que** la cavité (40.1) peut être remplie d'un fluide et être soumise à une pression, le serrage hydraulique étant indépendant de la construction des moyens de serrage (35.1, 35.2, 55) pour bloquer les lames et le serrage hydraulique étant obtenu par application d'une pression, la fine paroi ou couche (41) se courbant et venant appuyer contre une partie de la lame (10) qui se trouve dans l'ouverture de réception adjacente (25.1).

2. Tête porte-lames (20) selon la revendication 1, **caractérisée en ce que** la cavité (40.1) s'étend parallèlement à un axe longitudinal (LA) de l'ouverture de réception (25.1), transversalement à cet axe longitudinal (LA) ou de façon oblique par rapport à cet axe longitudinal (LA) dans le matériau de la tête porte-lames (20).

3. Tête porte-lames (20) selon la revendication 1 ou 2, **caractérisée en ce que** la tête porte-lames (20) présente un corps de base (30) avec une surface frontale (31), et **en ce que** les ouvertures de réception (25.1 - 25.n) sont réalisées dans cette surface frontale (31) et s'étendent dans le corps de base (30).

4. Tête porte-lames (20) selon la revendication 3, **caractérisée en ce que** la cavité (40.1) est accessible depuis la surface frontale (31) et **en ce que** la cavité (40.1) s'étend dans le corps de base (30) perpendiculairement à la surface frontale (31) ou de façon oblique par rapport à la surface frontale (31).

5. Tête porte-lames (20) selon la revendication 3, **caractérisée en ce que** la cavité (40.1) est accessible depuis une surface périphérique (33) et s'étend dans le corps de base (30) parallèlement à la surface frontale (31) ou de façon oblique.

6. Tête porte-lames (20) selon l'une des revendications 1 à 5, **caractérisée en ce que** la fine paroi ou couche (41) se trouve entre une section de l'ouverture de réception (25.1) et une section de la cavité (40.1).

7. Tête porte-lames (20) selon l'une des revendications 1 à 6, **caractérisée en ce que** la fine paroi ou couche (41) peut être déformée par la pression du fluide dans la cavité (40.1).

8. Tête porte-lames (20) selon l'une des revendications 1 à 6, **caractérisée en ce qu'**il y a une cavité (40.1) par ouverture de réception (25.1).

9. Tête porte-lames (20) selon l'une des revendications 1 à 6, **caractérisée en ce qu'**il est associé à une cavité (40.1) plusieurs ouvertures de réception (25.1).

10. Tête porte-lames (20) selon l'une des revendications 1 à 6, **caractérisée en ce qu'**il est prévu une cavité commune (40.1), cette cavité commune (40.1) étant séparée de plusieurs ouvertures de réception (25.1) respectivement par une fine paroi ou couche (41).

11. Tête porte-lames (20) selon l'une des revendications 1 à 10, **caractérisée en ce qu'**elle comprend au moins un dispositif de fermeture (10) qui permet de fermer une ou plusieurs des cavités (40.1).

12. Tête porte-lames (20) selon la revendication 11, **caractérisée en ce que** le dispositif de fermeture (10) comprend au moins un ensemble d'étanchéité ou une unité d'étanchéité (61) et une tige filetée (62).

13. Tête porte-lames (20) selon la revendication 12, **caractérisée en ce que** les dispositifs de fermeture (10) sont conçus de sorte qu'une alimentation et/ou un retrait du fluide est possible par un bouchon (61.1) de l'élément ou de l'unité d'étanchéité (61).

14. Utilisation d'une tête porte-lames (20) selon l'une des revendications 1 à 13, **caractérisée en ce que**, avant d'utiliser la tête porte-lames (20) pour usiner par enlèvement de copeaux une pièce, la pression du fluide est adaptée dans au moins une cavité (40.1).

15. Utilisation selon la revendication 14, **caractérisée en ce que** l'ajustement de la pression se fait manuellement en utilisant un outil.

16. Utilisation selon la revendication 14, **caractérisée en ce que** l'ajustement de la pression se fait par la prescription externe d'une pression hydraulique.
